# EUROPEAN PATENT SPECIFICATION

(11) **EP 4 279 274 B1**
(45) Date of publication and mention of the grant of the patent: **28.10.2026**
(21) Application number: 23201665.9
(22) Date of filing: 30.11.2017
(51) Int. Cl.: B22F 3/105, B33Y 10/00, B33Y 30/00

(54) **ADDITIVE MANUFACTURING SYSTEMS AND METHODS**
SYSTEME UND VERFAHREN ZUR GENERATIVEN FERTIGUNG
SYSTÈMES ET PROCÉDÉS DE FABRICATION ADDITIVE

(30) Priority: 14.12.2016 US 201615378116
(43) Date of publication of application: 22.11.2023
(62) Document number(s) of the earlier application(s) in accordance with Art. 76 EPC: 17880406.8 / 3 554 749
(73) Proprietor: General Electric Company, Schenectady, NY 12345 (US)
(72) Inventor: HARDING, Kevin George, Niskayuna, 12309 (US)
(74) Representative: Hafner & Kohl PartmbB

(56) References cited:
- WO-A1-2016/075801
- US-A1- 2003 052 105

## Description

The present invention relates generally to the use of a micro-mirror technology in additive manufacturing, for example Direct Metal Laser Melting (DMLM) systems and processes, to allow for the creation of full patterns simultaneously to facilitate higher build speeds, and more particularly to additive manufacturing method and system according to the preamble of claims 1 and 9, see for example US 2003/052105 A1.

Additive manufacturing is a technology that enables the "3D-printing" of components of various materials including metals, ceramics and plastics. In additive manufacturing, a part is built in a layer-by-layer manner by leveling, for example, metal powder and selectively fusing the powder within a layer using a high-power laser or electron beam. After each layer, more powder is added and the laser patterns the next layer, simultaneously fusing it to the prior layers to fabricate a complete component buried in a powder bed. Additive manufacturing systems and processes are used to fabricate precision three-dimensional components from a digital model.

Current systems and processes are limited in speed by the time needed to fully scan out each part layer in a serial manner using a single scanning mirror to direct a high power laser beam along the outline of one layer of the part to be made. Once the outline of the part is complete, the scanner directs the beam to the region between the inner and outer walls to fill in the material. In each process, the laser melts a thin layer of powdered metal to melt the metal onto the previous layer produced. Once a layer is made, a recoater bar moves across and adds another layer of powder and the process with the laser is repeated. Each layer can take several seconds to a few minute to complete with many thousands of layers needed to make a part.

An alternate way to build a full section at a time is to use a mask which only lets a small area of a wide beam to the powder at one time. A disadvantage of this approach is it is very laser power inefficient, requiring the dumping of most of the laser power.

In making a build in current powder bed systems, the laser beam or electron beam is used to scan a layer of powder to sinter and melt the desired pattern in the layers of the powder bed. The typical scanning time for such systems per layer is in the range of 70-100 seconds. For some applications, the build can require days of processing time. One application of DMLM is in the fabrication and repair of airfoils for gas turbine engines for aircraft. The geometries of the airfoils are difficult to form using conventional casting technologies, thus fabrication of the airfoils using a DMLM process or an electron-beam melting process has been proposed. With the layers built upon one another and joined to one another cross-section by cross-section, an airfoil or portion thereof, such as for a repair, with the required geometries, may be produced. The airfoil may require post-processing to provide desired structural characteristics.

### BRIEF DESCRIPTION

In accordance with a first aspect of the present invention, an additive manufacturing method is defined in claim 1, and comprises inter alia: patterning a laser beam using a mirror array; and reflecting the patterned laser beam from the mirror array onto a powder to melt the powder, wherein the pattern corresponds to a portion of a layer of an article..

In accordance with a second aspect of the present invention, an additive manufacturing system is defined in claim 9, and comprises inter alia: a build table configured to support an article to be manufactured from powder; a laser source configured to generate a laser beam; and a mirror array configured to pattern the laser beam and reflect the patterned laser beam onto the powder to melt the powder, wherein the pattern corresponds to a portion of a layer of the article.

Preferred embodiments of the first and second aspects of the present invention are defined in their respective dependent claims.

### DRAWINGS

These and other features, aspects, and advantages of the present invention will become better understood when the following detailed description is read with reference to the accompanying drawings in which like characters represent like parts throughout the drawings, wherein:
FIG. 1 schematically depicts a DMLM system;
FIG. 2 schematically depicts an array of micro-mirrors;
FIG. 3 schematically depicts a micro-mirror of the array;
FIG. 4 schematically depicts the micro-mirror of FIG. 3 in a tilted position; and
FIG. 5 schematically depicts a portion of the system of FIG. 1 for forming a desired beam profile.

### DETAILED DESCRIPTION

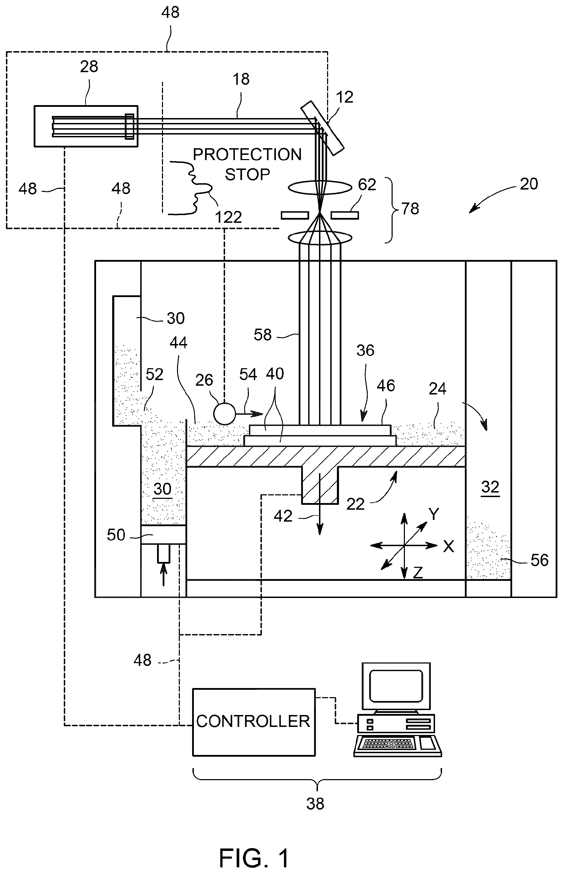

Referring to FIG. 1, an additive manufacturing system 20, for example a DMLM system 20 includes a build table 22 for holding a powder bed 24, a particle spreader or wiper or recoater bar 26 for spreading the powder bed 24 over the build table 22, a powder supply hopper 30 for supplying powder to the spreader 26, and a powder surplus hopper 32. The additive manufacturing system 20 may be configured to build or repair a workpiece 36 in a layer-by-layer fashion.

A controller 38 may have an integral CAD system for modeling the workpiece 36 into a plurality of layers 40 additively built atop one another generally in a vertical or z-coordinate direction (see arrow 42). As manufactured, each solidified layer 40 corresponds to a layer 44 of the powder bed 24 prior to solidification. The powder bed layer 44 is placed on top of a build surface 46 of the previously solidified layer 40. The controller 38 is configured to operate the system 20 through a series of electrical and/or digital signals 48 sent to the system 20 components. For example, the controller 38 may send a signal 48 to a piston 50 of the supply hopper 30 to sequentially push a supply powder 52 upward for receipt by the spreader 26, or alternatively or in addition thereto, the supply hopper 30 may feed powder downward via gravity. The spreader 26 may be a wiper, roller or other device that pushes the powder bed layer 44 in the direction 54 or otherwise places the supply powder 52 over the build surface 46 of the workpiece 36 by a predetermined thickness established through downward movement 42 of the build table 22 controlled by the controller 38. Any excess powder 56 may be pushed into the surplus hopper 32 by the spreader 26. It should be appreciated that the powder bed layer 44 may not be composed of a powder but may take the form of any substrate that may be layed or applied across the build surface 46 in preparation for melting.

Once a substantially level powder layer 44 is established over the build surface 46, the controller 38 may send a signal 48 to a laser source 28 to selectively melt the top layer 44 by use of an array 12 of small, individually directed mirrors. A wide laser beam 18, or similar illumination (e.g. can be from multiple laser sources) is configured to illuminate the array 12. The laser beam 18 or beams may have a power of from about 10 to 60 W. Groups of mirrors (e.g. 9 to 25 mirrors) direct the laser power from the array 12 to one spot on the full pattern of the powder bed layer 44 that is spread onto the build surface 46 by the wiper 26. Another group of mirrors, for example another group of 9-25 mirrors, directs the laser power from the array 12 to an adjacent spot. This grouping of mirrors is, according to the present invention, used to direct the laser power to multiple spots in the pattern, for example enough spots to form the entire pattern, so that the multiple spots of the pattern may be formed simultaneously. In this manner, a larger percentage (e.g. over 10%) to as much as the full pattern (depending on complexity of the layer) may be illuminated simultaneously. This may reduce the layer melt time for the entire layer 40 of the workpiece 36 to under one second. The next layer 44 of powder can then be spread over the build surface 46, for example by the wiper 26 or by for example a fluidized bed where the workpiece 36 is lowered into the powder bed by a small step, i.e. by the thickness of the next layer 40. Each micro-mirror may be 0.5 to 0.9 mm in size. The typical power capacity for such mirrors is rated as 1 to 3 W depending on the coating and the laser wavelength. For superalloy powders of about 10-60 µm particle sized, to melt one spot requires 10 to 25 W of power in a 0.1 mm spot. For an array of 200 x 200 mirrors, this would permit 1600 to 4000 spots to be illuminated simultaneously. This would be enough to create 20 to over 100 linear mm of a part wall in a few milliseconds. The array 12 can be repointed in a few more milliseconds to achieve over 4000 mm per second build rate.

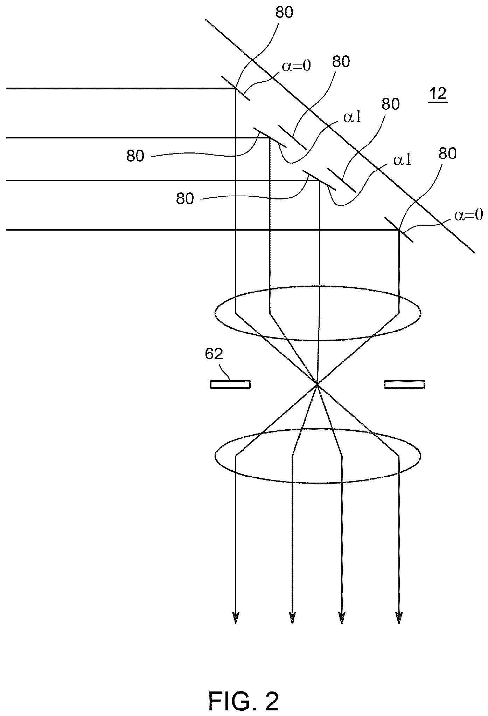

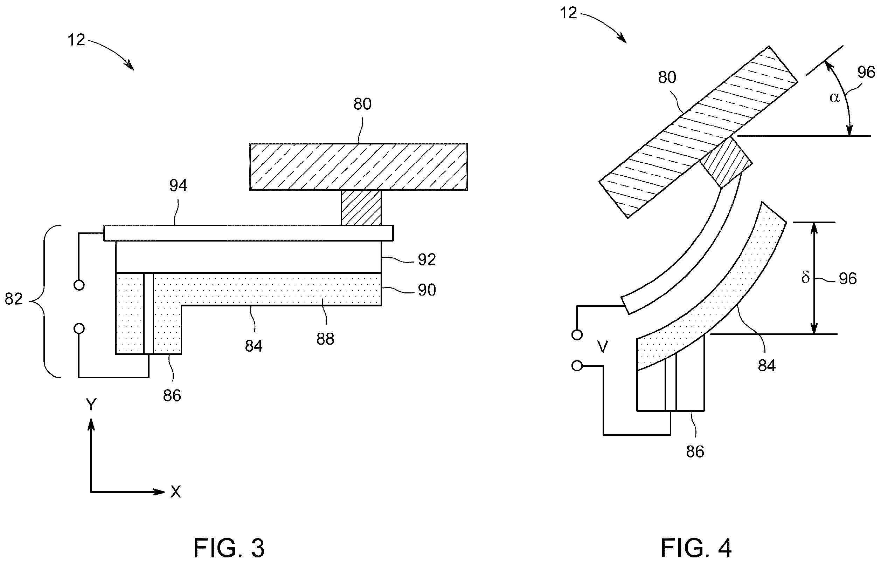

Referring to FIGS. 1-4, the array 12 may be an array of thin-film micro-mirrors and may have, for example, an array of 200 x 200 mirrors, each mirror being 0.5 to 0.9 mm in size. Referring to FIGS. 3 and 4, each micro-mirror 80 may be formed of aluminum. The array 12 may use thin film piezoelectric actuators 82 in the form of micro-cantilevers. As shown in FIGS. 3 and 4, each mirror 80 may be connected to a cantilever 84 through a support post 86. The cantilevers 84 may be anchored to an underlying substrate. A cantilever 84 includes a supporting layer 88, a bottom electrode 90, a piezoelectric layer 92 and top electrode 94. When an electric field is applied between the electrodes 90 and 94, the piezoelectric layer 92 layer shrinks in the horizontal direction and expands in the vertical direction. Since the neutral plane of the cantilever 84 shifts toward the bottom of the electrode 90 due to thickness of the supporting layer 88, the mechanical strain of the piezoelectric layer 92 causes vertical deflection delta 96 of the cantilever 84 and a tilt of angle alpha 98 of the mirror 80 on top of it. The mirrors in FIG. 2 are shown at various tilt angles in accordance with the energy distribution patterns determined by controller 38. FIGS. 2 and 3 show that the tilt angle alpha 98 of the mirror may be linearly proportional to the applied voltage within a voltage operating range.

The pattern, or outline, of each layer 40 may be stored in the controller 38 and the mirrors 80 of the array 12 may be controlled by the controller to reflect the laser beam or beams 18 and direct the reflected beam or beams 58 onto the powder layer 44 provided over the build surface 46 in the shape of the next layer 40 to be fused (i.e. built). For operation with the laser source 26 and the array 12, imaging optical components 18 provide control of laser beam homogenization and shaping. As shown in FIG. 1, the controller 38 is provided a preselected pattern for each layer 40 and controls the array 12 to modify the beam or beams 18 from the laser source 28 to form the reflected, or output, beam or beams 58. The mirrors 80 are continuously moveable for reflecting varying amounts of energy from the laser source 28. The controller 38 may be configured to move the mirrors 80 to partially reflective positions to spatially vary the laser beam energy profile.

To homogenize the spatial intensity distribution of the laser beam 18, a beam spatial profile measurement 122 is made and sent to the controller 38 and compared with a desired spatial profile. The controller 38 positions the mirrors 80 to set each mirror 80 to an angle that changes the amount of energy at melt spot in accordance with the desired beam profile. To homogenize the beam 58, the desired profile is uniform across the beam 58 and the mirrors 80 are so set. The controller 38 may be configured to monitor the laser beam profile measurement 122 and adjust the array 12 in accordance with the desired profile. Adjustments can be rapidly made on a pulse-by-pulse basis.

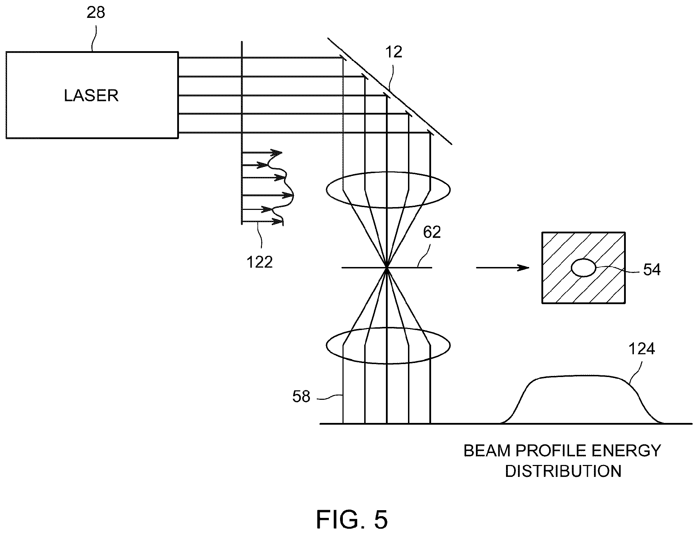

The optical system may control the energy intensity through continuous changes of the reflection angle of each mirror 80 as shown in FIGS. 2 and 5. The laser energy reflected on the mirror 80 forms an intensity image on the projection stop plane 62 and this image moves along the horizontal axis as the reflection angle changes. By changing the number of beams directed to one spot or series of spots, the system 20 can adjust the power distribution of one spot to the next in a continuous manner. The creation of a homogenized laser beam distribution profile 124 with the two-dimensional array 12 with continuously adjustable mirror positions may include all beam energy profiles, from a simple Gaussian shape to complex energy profiles are possible e.g. annular rings and multiple Gaussian beamlets with different peak energy intensities.

It should be appreciated that the laser source may instead be any other source of energy beams capable of heating the powder to sufficient temperatures and at sufficient rates. Each beam may operate with different frequencies to meet manufacturing objectives. For example, beams with shorter wavelengths may heat up the powder faster than beams with longer wavelengths. Different optical frequencies or wavelengths typically requires different types of lasers; for example, CO₂ lasers, diode lasers, and fiber lasers. The wavelength, and thus the laser type, for heating and/or melting may be based on the composition of the powder (for example metal or ceramic or polymer). Particles of a powder may have different heat absorption rates impacting melting rates and solidification rates. Besides wavelength, other properties of the beam may be considered. For example, pulsed laser beams or continuous laser beams may be used to melt the powder.

The present technology addresses the problem of the long build time for a part which can reach over 24 hours for even a small part. By making the build with a series of laser pulses, each creating thousands of build points per second, the operation is made parallel rather than a serial build of one point at a time as currently done. A technical advantage of the present technology is the highly parallel build of an additive part using a micro mirror array to create each segment of the built layer. Another technical advantage of the present technology is the ability to control heating and cooling rates by tailoring the laser energy power over time spectrum. Controlling cooling can be used to minimize cracking of some materials. A further technical advantage of the present technology is the elimination of geometric errors sometimes associated with scanning galvanometers when building a feature off to the side. An even further technical advantage of the present technology is the ability to form some difficult features such as overhang areas simultaneously which may reduce distortions of such features. Yet another technical advantage of the present technology is its use with a waterfall type powder delivery (powder falling in a thin sheet in front of a horizontally built part), as a full section would be created at one time. With a point scanning system there may be a need to reduce the speed of the scan to not move faster than the fall rate of the powder. A commercial advantage of the present technology is faster build rates.

Although the present invention may be applicable to the build function on components, it should be appreciated that the present invention is applicable for the additive manufacturing repair of components.

While only certain features of the present invention have been illustrated and described herein, many modifications and changes will occur to those skilled in the art, as long as they stay within the frame of the present invention as defined in the appended claims.

## Claims

1. An additive manufacturing method, comprising:
patterning a laser beam using a mirror array (12) comprising small, individually directed mirrors; and
the method being **characterised by**:
reflecting, with a grouping of mirrors for directing the laser power from the array (12) to one spot on the pattern, the patterned laser beam from the mirror array onto a powder to melt the powder, wherein the pattern corresponds to a portion of a layer of an article, wherein the grouping of mirrors is configured to direct laser power to multiple spots in the pattern so that the multiple spots of the pattern are formed simultaneously.

2. A method according to claim 1, further comprising:
providing a desired distribution profile to the laser beam; optionally further comprising controlling an energy intensity of the patterned beam through changes of a reflection angle of each mirror.

3. A method according to claim 1, wherein a power capacity of each mirror is 1 to 3 watts and the groups of mirrors are configured to provide laser spots of 10 to 25 watts; wherein each laser spot is preferably 0.1 mm.

4. A method according to claim 1, wherein the pattern corresponds to a 10% to 100% of the layer of the article.

5. A method according to claim 1, wherein multiple spots of the pattern are formed simultaneously

6. A method according to claim 1, wherein the patterned laser beam comprises beams of different frequencies or wavelengths.

7. A method according to claim 1, wherein the build is made with a series of laser pulses enabling a parallel operation.

8. A method according to claim 1, further comprising implementing a powder delivery in which powder is falling in a thin sheet in front of a horizontally built part.

9. An additive manufacturing system, comprising:
a build table (22) configured to support an article to be manufactured from powder;
a laser source (28) configured to generate a laser beam; and
the system being **characterised by**:
a mirror array (12) configured to pattern the laser beam and reflect the patterned laser beam onto the powder to melt the powder, wherein the pattern corresponds to a portion of a layer of the article, wherein the mirror array comprises a grouping of mirrors comprising groups of mirrors for directing the laser power from the array (12) to one spot on the pattern, the grouping of mirrors configured to direct laser power to multiple spots in the pattern so that the multiple spots of the pattern are formed simultaneously.

10. A system according to claim 9, further comprising:
an optical system configured to provide a desired distribution profile to the laser beam; wherein the optical system is particularly further configured to control an energy intensity of the patterned beam through changes of a reflection angle of each mirror.

11. A system according to claim 9, wherein the patterned laser beam comprises a plurality of laser spots, and groups of 9-25 mirrors are configured to provide each laser spot of the patterned laser beam; wherein optionally a power capacity of each mirror is 1 to 3 watts and the groups of mirrors are configured to provide laser spots of 10 to 25 watts; wherein each laser spot is particularly 0.1 mm.

12. A system according to claim 9, wherein the pattern corresponds to a 10% to 100% of the layer of the article.

13. A system according to claim 9, wherein the mirror array is configured to illuminate 1600 to 4000 spots simultaneously, particularly in an array of 200 x 200.

14. A system according to claim 9, wherein the patterned laser beam comprises beams of different frequencies or wavelengths.

15. A system according to claim 9, wherein the system is configured to make a build with a series of laser pulses enabling a parallel operation.

## Patentansprüche

1. Ein additives Fertigungsverfahren, umfassend:
Strukturieren eines Laserstrahls unter Verwendung eines Spiegelarrays (12), das kleine, einzeln ausgerichtete Spiegel umfasst; und wobei das Verfahren **gekennzeichnet ist durch**
Reflektieren des strukturierten Laserstrahls von dem Spiegelarray auf ein Pulver, um das Pulver zu schmelzen, mit einer Gruppierung von Spiegeln zum Richten der Laserleistung von dem Array (12) auf einen Punkt des Musters, wobei das Muster einem Abschnitt einer Schicht eines Gegenstands entspricht, wobei die Gruppierung von Spiegeln dazu ausgelegt ist, Laserleistung auf mehrere Punkte in dem Muster zu richten, sodass die mehreren Punkte des Musters gleichzeitig gebildet werden.

2. Das Verfahren nach Anspruch 1, ferner umfassend:
Versehen des Laserstrahls mit einem gewünschten Verteilungsprofil; optional ferner umfassend Steuern einer Energieintensität des strukturierten Strahls durch Änderungen eines Reflexionswinkels jedes Spiegels.

3. Das Verfahren nach Anspruch 1, wobei eine Leistungskapazität jedes Spiegels 1 bis 3 Watt beträgt und die Gruppen von Spiegeln dazu ausgelegt sind, Laserpunkte mit 10 bis 25 Watt bereitzustellen; wobei jeder Laserpunkt vorzugsweise 0,1 mm groß ist.

4. Das Verfahren nach Anspruch 1, wobei das Muster 10 % bis 100 % der Schicht des Gegenstands entspricht.

5. Das Verfahren nach Anspruch 1, wobei mehrere Punkte des Musters gleichzeitig gebildet werden.

6. Das Verfahren nach Anspruch 1, wobei der strukturierte Laserstrahl Strahlen unterschiedlicher Frequenzen oder Wellenlängen umfasst.

7. Das Verfahren nach Anspruch 1, wobei der Aufbau mit einer Reihe von Laserpulsen hergestellt wird, die einen Parallelbetrieb ermöglichen.

8. Das Verfahren nach Anspruch 1, ferner umfassend Implementieren einer Pulverzuführung, bei der Pulver in einer dünnen Schicht vor einem horizontal aufgebauten Teil herabfällt.

9. Ein additives Fertigungssystem, umfassend:
einen Bautisch (22), der dazu ausgelegt ist, einen aus Pulver herzustellenden Gegenstand zu tragen;
eine Laserquelle (28), die dazu ausgelegt ist, einen Laserstrahl zu erzeugen; und wobei das System **gekennzeichnet ist durch**
ein Spiegelarray (12), das dazu ausgelegt ist, den Laserstrahl zu strukturieren und den strukturierten Laserstrahl auf das Pulver zu reflektieren, um das Pulver zu schmelzen, wobei das Muster einem Abschnitt einer Schicht des Gegenstands entspricht, wobei das Spiegelarray eine Gruppierung von Spiegeln umfasst, die Gruppen von Spiegeln zum Erfassen der Laserleistung von dem Array (12) auf einen Punkt des Musters umfasst, wobei die Gruppierung von Spiegeln dazu ausgelegt ist, Laserleistung auf mehrere Punkte in dem Muster zu richten, sodass die mehreren Punkte des Musters gleichzeitig gebildet werden.

10. Das System nach Anspruch 9, ferner umfassend:
ein optisches System, das dazu ausgelegt ist, den Laserstrahl mit einem gewünschten Verteilungsprofil zu versehen; wobei das optische System insbesondere ferner dazu ausgelegt ist, eine Energieintensität des strukturierten Strahls durch Änderungen eines Reflexionswinkels jedes Spiegels zu steuern.

11. Das System nach Anspruch 9, wobei der strukturierte Laserstrahl eine Vielzahl von Laserpunkten umfasst und Gruppen von 9 bis 25 Spiegeln dazu ausgelegt sind, jeden Laserpunkt des strukturierten Laserstrahls bereitzustellen; wobei optional eine Leistungskapazität jedes Spiegels 1 bis 3 Watt beträgt und die Gruppen von Spiegeln dazu ausgelegt sind, Laserpunkte mit 10 bis 25 Watt bereitzustellen; wobei jeder Laserpunkt insbesondere 0,1 mm groß ist.

12. Das System nach Anspruch 9, wobei das Muster 10 % bis 100 % der Schicht des Gegenstands entspricht.

13. Das System nach Anspruch 9, wobei das Spiegelarray dazu ausgelegt ist, 1600 bis 4000 Punkte gleichzeitig zu beleuchten, insbesondere in einem Array von 200 x 200.

14. Das System nach Anspruch 9, wobei der strukturierte Laserstrahl Strahlen unterschiedlicher Frequenzen oder Wellenlängen umfasst.

15. Das System nach Anspruch 9, wobei das System dazu ausgelegt ist, einen Aufbau mit einer Reihe von Laserpulsen herzustellen, die einen Parallelbetrieb ermöglichen.

## Revendications

1. Un procédé de fabrication additive, comprenant :
la structuration d'un faisceau laser à l'aide d'un réseau de miroirs (12) comprenant de petits miroirs orientés individuellement ; et le procédé étant **caractérisé par**
la réflexion du faisceau laser structuré depuis le réseau de miroirs sur une poudre afin de faire fondre la poudre, au moyen d'un groupement de miroirs destiné à diriger la puissance laser du réseau (12) vers un point du motif, dans lequel le motif correspond à une partie d'une couche d'un article, dans lequel le groupement de miroirs est configuré pour diriger la puissance laser vers plusieurs points du motif de telle sorte que lesdits plusieurs points du motif soient formés simultanément.

2. Le procédé selon la revendication 1, comprenant en outre :
l'attribution d'un profil de distribution souhaité au faisceau laser ; comprenant facultativement en outre la commande d'une intensité énergétique du faisceau structuré par des modifications d'un angle de réflexion de chaque miroir.

3. Le procédé selon la revendication 1, dans lequel une capacité de puissance de chaque miroir est de 1 à 3 watts et les groupes de miroirs sont configurés pour fournir des points laser de 10 à 25 watts ; dans lequel chaque point laser mesure de préférence 0,1 mm.

4. Le procédé selon la revendication 1, dans lequel le motif correspond à 10 % à 100 % de la couche de l'article.

5. Le procédé selon la revendication 1, dans lequel plusieurs points du motif sont formés simultanément.

6. Le procédé selon la revendication 1, dans lequel le faisceau laser structuré comprend des faisceaux de fréquences ou de longueurs d'onde différentes.

7. Le procédé selon la revendication 1, dans lequel la fabrication est réalisée avec une série d'impulsions laser permettant un fonctionnement parallèle.

8. Le procédé selon la revendication 1, comprenant en outre la mise en œuvre d'une alimentation en poudre dans laquelle de la poudre tombe sous la forme d'une feuille mince devant une pièce fabriquée horizontalement.

9. Un système de fabrication additive, comprenant :
une table de fabrication (22) configurée pour supporter un article à fabriquer à partir de poudre ;
une source laser (28) configurée pour générer un faisceau laser ; et le système étant **caractérisé par**
un réseau de miroirs (12) configuré pour structurer le faisceau laser et réfléchir le faisceau laser structuré sur la poudre afin de faire fondre la poudre, dans lequel le motif correspond à une partie d'une couche de l'article, dans lequel le réseau de miroirs comprend un groupement de miroirs comprenant des groupes de miroirs destinés à détecter la puissance laser du réseau (12) vers un point du motif, le groupement de miroirs étant configuré pour diriger la puissance laser vers plusieurs points du motif de telle sorte que lesdits plusieurs points du motif soient formés simultanément.

10. Le système selon la revendication 9, comprenant en outre :
un système optique configuré pour attribuer un profil de distribution souhaité au faisceau laser ; dans lequel le système optique est en particulier configuré en outre pour commander une intensité énergétique du faisceau structuré par des modifications d'un angle de réflexion de chaque miroir.

11. Le système selon la revendication 9, dans lequel le faisceau laser structuré comprend une pluralité de points laser, et des groupes de 9 à 25 miroirs sont configurés pour fournir chaque point laser du faisceau laser structuré ; dans lequel, facultativement, une capacité de puissance de chaque miroir est de 1 à 3 watts et les groupes de miroirs sont configurés pour fournir des points laser de 10 à 25 watts ; dans lequel chaque point laser mesure en particulier 0,1 mm.

12. Le système selon la revendication 9, dans lequel le motif correspond à 10 % à 100 % de la couche de l'article.

13. Le système selon la revendication 9, dans lequel le réseau de miroirs est configuré pour éclairer simultanément 1600 à 4000 points, en particulier dans un réseau de 200 x 200.

14. Le système selon la revendication 9, dans lequel le faisceau laser structuré comprend des faisceaux de fréquences ou de longueurs d'onde différentes.

15. Le système selon la revendication 9, dans lequel le système est configuré pour effectuer une fabrication avec une série d'impulsions laser permettant un fonctionnement parallèle.
